(19) Europäisches Patentamt / European Patent Office / Office européen des brevets

(11) **EP 2 750 317 A2**

(12) **EUROPEAN PATENT APPLICATION**

(43) Date of publication:
**02.07.2014 Bulletin 2014/27**

(51) Int Cl.:
***H04L 1/00*** *(2006.01)*

(21) Application number: **13156964.2**

(22) Date of filing: **27.02.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.12.2012 KR 20120154015**

(71) Applicant: **Korea Electronics Technology Institute Gyeonggi-do 463-816 (KR)**

(72) Inventors:
• **Seo, Jeong Wook**
 **Gyeonggi-do (KR)**
• **Wee, Jung Wook**
 **Seoul (KR)**
• **Lee, Youn Sung**
 **Seoul (KR)**
• **Park, Kyung Won**
 **Seoul (KR)**

(74) Representative: **Nordmeyer, Philipp Werner et al df-mp Dörries Frank-Molnia & Pohlman Patentanwälte Rechtsanwälte PartG mbB Theatinerstraße 16 80333 München (DE)**

(54) **Frame detecting method using decoded information of physical layer signalling in DVB-S2**

(57) Provided is a method for stably receiving AV data by reducing occurrence of false alarm caused by incorrect recognition of a frame start point in a frame detection unit in a DVB-S2 system that is a next generation satellite broadcast system. According to the present invention, by providing reliability determination criteria for decoded information bits of a PLS code that provides information on an overall frame configuration, it is prevented that update is performed with erroneous system parameters. Thus, stability of the whole system can be secured.

FIG. 1

**Description**

**CROSS-REFERENCE TO RELATED APPLICATIONS**

This application claims priority under 35 U.S.C. § 119 to Korean Patent Application No. 10-2012-0154015, filed on Dec 27, 2012, the disclosure of which is incorporated herein by reference in its entirety.

**TECHNICAL FIELD**

The present invention relates to a technique of receiving frames in a digital video broadcasting satellite second generation (DVB-2) system, which is a next generation satellite broadcasting system in Europe, and in particular, to a method of detecting a starting point of a transmission frame (TS).

**BACKGROUND**

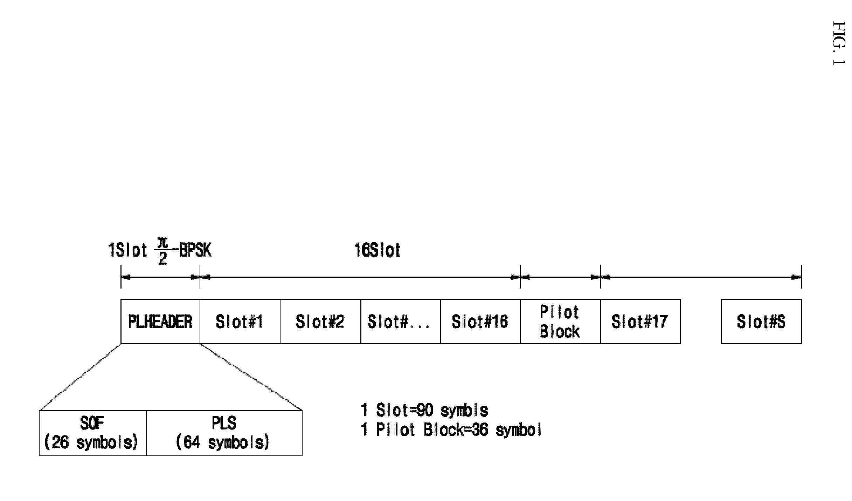

A DVB-S2 system is a next generation satellite broadcasting system capable of transmitting a high-quality DVT broadcast, and has a transmission frame structure as illustrated in FIG. 1. Each frame includes a PLHEADER part for transmission and a slot part for transmitting actual DTV broadcast content. The PLHEADER includes a start of frame (SOF) symbol transmitted at a start point of a frame, a MODCOD field for designating modulation/sign schemes, and a physical layer signaling (PLS) code symbol for transmitting TYPE field information designating whether to use a frame mode/pilot symbol. The PLHEADER includes 90 symbols, and each slot also includes 90 symbols. The number of slots, i.e. S, is determined according to a modulation scheme and a size of a sign block. In the case where a pilot block is used, a pilot block including 36 symbols for every 16 slots is transmitted.

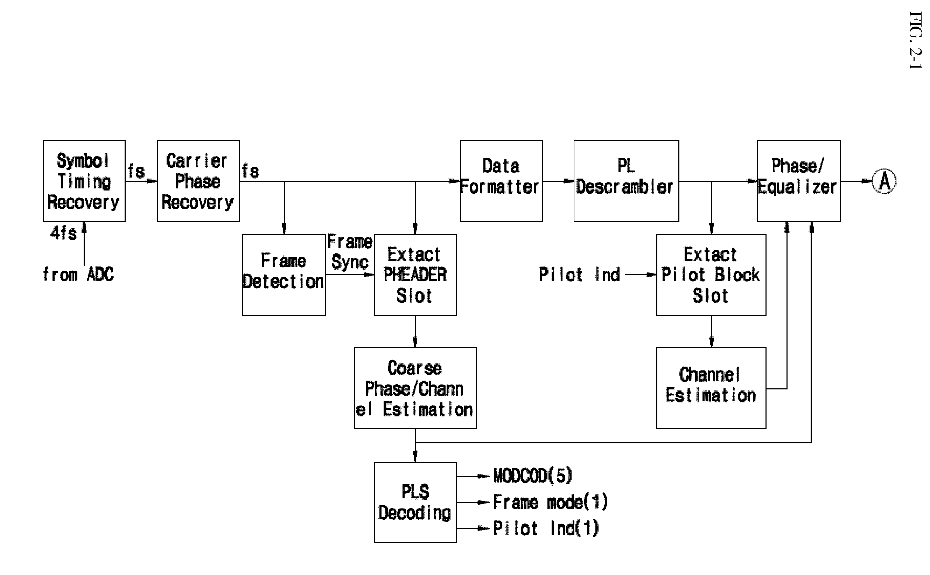

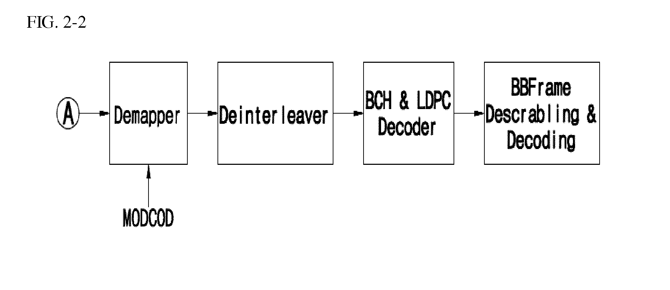

FIG. 2 is a schematic block diagram illustrating a DVB-S2 receiver according to the related art. A sample oversampled by four times in an analog-digital converter (ADC) is timing-error-corrected and down-sampled to a normal sampling frequency in a symbol timing recovery unit, and is phase-offset-compensated in a carrier phase recovery unit. Here, an oversampling rate in the ADC may be differently selected by a system implementer. A frame detection unit detects the frame start point and SOF of PLHEADER illustrated in FIG. 1 on the symbol of which symbol timing and carrier phase have been compensated. When the frame start point is detected, a PLS code of the PLHEADER is demodulated and decoded to check modulation/sign information (MODCOD field), sign code length, and whether a pilot block is used (TYPE field). Finally, by using this information, the length of the whole frame is calculated, and demodulation and decoding processes are performed for each slot.

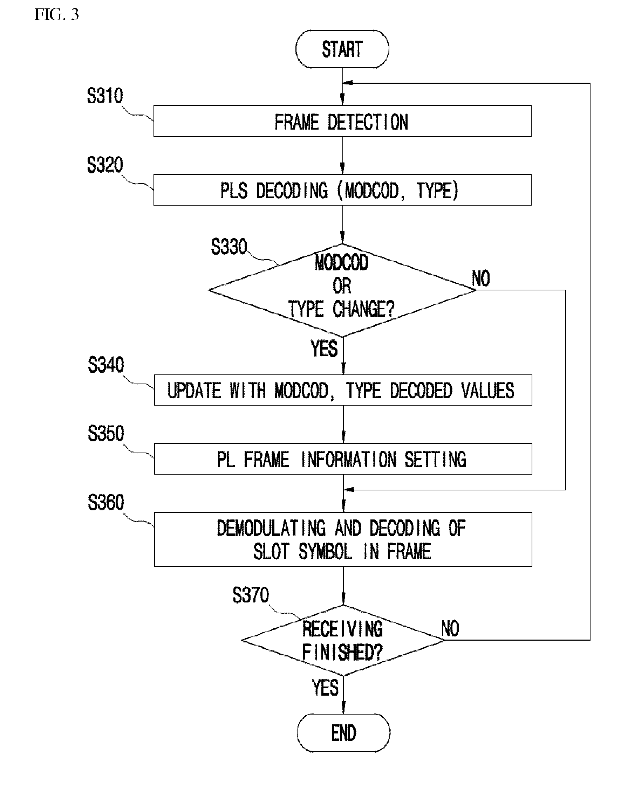

FIG. 3 is a flowchart illustrating processes of frame detection and PLS decoding according to the related art. Referring to FIG. 3, the frame detecting and PLS decoding method according to the related art includes detecting a frame in operation S310, checking MODCOD field and TYPE field information through decoding of a PLS code in operation S320, and comparing information of a previous frame and PLS code decoding information of a current frame in operation S330. If the PLS code decoding information of the current frame, i.e. information of the MODCOD field and TYPE field, is not changed in comparison with the information of the previous frame, a slot symbol received after the PLHEADER is decoded in operation S360.

If the information of the MODCOD field and TYPE field obtained from the previous frame is different from the information detected from the current frame, the information of the MODCOD field and TYPE field is updated in operation S340, and frame-related information such as frame length, modulation order, and encoding length is calculated and is applied to the current frame in operation S350.

Thereafter, demodulation and decoding are performed for a slot symbol in the current frame in operation S360, and, if receiving is not finished after the demodulation and decoding for the slot symbol are completed in operation S370, a process flow is back to operation S310 for detecting a start point of a next frame.

Since a forward error correction (FEC) code having a high code rate of R=3/16 is applied to the PLS code, the PLS code may provide stable performance even in an environment where errors occur. However, if a frame detection position is incorrectly recognized in operation S310 of FIG. 3, it is unavoidable that erroneous PLS is decoded. As illustrated in FIG. 3, according to the related art, an operation of a receiver is determined depending on frame detection performance. If a frame detection unit recognizes an incorrect position as a frame start point in operation S310, the MODCOD and TYPE information decoded during the PLS decoding process in operation S320 has a value that is totally different from that of actually transmitted information, and there occur problems in decoding of a slot symbol. Therefore, it is necessary to secure stable receiving performance by reducing such a false alarm.

**SUMMARY**

Accordingly, the present invention provides a method for stably receiving AV data by reducing occurrence of false alarm caused by incorrect recognition of a frame start point in a frame detection unit in a DVB-S2 system that is a next generation satellite broadcast system.

The present invention also provides a method for securing stability of the whole system by preventing update with erroneous system parameters by providing reliability determination criteria for decoded information bits of a PLS code that provides information on an overall frame configuration.

The present invention is not limited as mentioned above, other features may be clearly understood by those skilled in the art from the disclosure below.

In one general aspect, a method of detecting a frame of a DVB-S2 receiver using physical layer signaling (PLS) decoded information includes: decoding a PLS code of a transmission bit stream; calculating a reliability coefficient of an information bit $b_k$ decoded in a reed-muller (RM) code constituting the PLS code; and evaluating validity of information decoded from the PLS code by using the reliability coefficient.

The calculating of a reliability coefficient may include calculating a reliability coefficient $r_k$ for each information bit $b_k$ by using correlation between a majority coefficient $m_k$ for each information bit $b_k$ calculated during the decoding of the PLS code and the information bit $b_k$.

The reliability coefficient may be calculated by Equation

$$r_k = \frac{(2b_k - 1)(m_k - A)}{A}, \quad k = 0,1,2,...,K-1$$

where, $m_k$ denotes a majority coefficient, $b_k$ denotes a decoded kth information bit, and "A" denotes a decision boundary.

The reliability coefficient may have a value between 0 and 1. As the reliability coefficient for the decoded information bit is closer to 0, reliability may be low, and, as the reliability coefficient is closer to 1, reliability may be high.

The evaluating of validity may include determining that the information decoded from the PLS code is not erroneous when the reliability coefficients for all decoded information bits are greater than a preset threshold value.

The evaluating of validity may include determining that the information decoded from the PLS code is not erroneous when an average of the reliability coefficients for all decoded information bits is greater than a preset threshold value.

The method may further include searching for a next frame without demodulating a slot for transmitting broadcast content in a current frame when the information decoded from the PLS code is determined to be erroneous as a result of evaluating validity of the information decoded from the PLS code.

Other features and aspects will be apparent from the following detailed description, the drawings, and the claims.

## BRIEF DESCRIPTION OF THE DRAWINGS

FIG. 1 is a block diagram illustrating a transmission frame structure in a DVB-S2 receiver.

FIG. 2 is a schematic block diagram illustrating a DVB-S2 receiver according to the related art.

FIG. 3 is a flowchart illustrating processes of frame detection and PLS decoding according to the related art.

FIG. 4 is a flowchart illustrating a sequence of a frame detecting method of a DVB-S2 receiver using PLS decoded information according to an embodiment of the present invention.

FIG. 5 is a diagram illustrating correlation between a majority coefficient and a decoded information bit.

## DETAILED DESCRIPTION OF EMBODIMENTS

Advantages and features of the present invention, and implementation methods thereof will be clarified through following embodiments described with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art. Further, the present invention is only defined by scopes of claims. In the following description, the technical terms are used only for explaining a specific exemplary embodiment while not limiting the inventive concept. The terms of a singular form may include plural forms unless specifically mentioned.

Hereinafter, exemplary embodiments of the inventive concept will be described in detail with reference to the accompanying drawings. In adding reference numerals for elements in each figure, it should be noted that like reference numerals already used to denote like elements in other figures are used for elements wherever possible. Moreover, detailed descriptions related to well-known functions or configurations will be ruled out in order not to unnecessarily obscure subject matters of the present invention.

According to a frame detecting method of a DVB-S2 receiver using PLS decoded information according to an embodiment of the present invention, unlike the related art described above with reference to FIG. 3, a coefficient (reliability coefficient) for measuring reliability of information bits decoded during an RM decoding process is calculated. Further, according to the present invention, by using a reliability coefficient, a false alarm of frame detection is reduced.

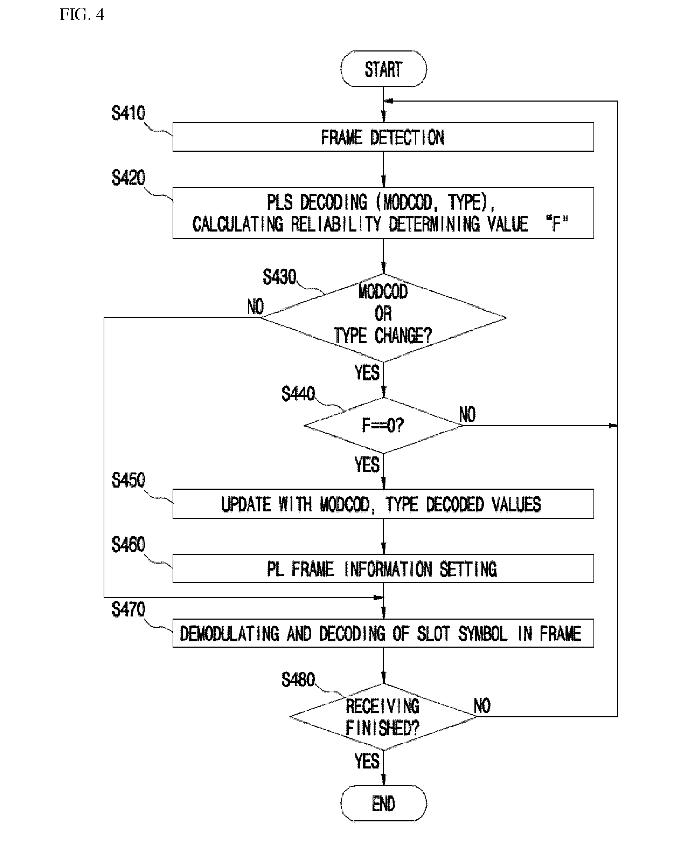

Hereinafter, a frame detecting method of a DVB-S2 receiver using PLS decoded information, according to an embodiment of the present invention, will be described with reference to FIG. 4. FIG. 4 is a flowchart illustrating a sequence of the frame detecting method of the DVB-S2 receiver using PLS decoded information according to the embodiment of the present invention.

First, the DVB-S2 receiver detects a frame on a transmission bit stream in operation S410, and decodes a physical layer signaling (PLS) code in a PLHEADER of the detected frame (current frame) in operation S420.

As described above, the PLHEADER includes a start of frame (SOF) symbol transmitted at a start point of a frame, a MODCOD field for designating modulation/code schemes, and a PLS code symbol for transmitting TYPE field information designating whether to use a frame mode/pilot symbol.

A PLS code includes 7 bits in total (MODCOD: 5 bits, TYPE: 2 bits), wherein upper six bits from $b_0$ to $b_5$ are encoded to (32,6) reed-muller (RM) having a code rate of R=3/16 through a code generation matrix as expressed in Equation (1) in order to be repeatedly transmitted, and the least significant bit (LSB) determines a sign of a bit sequence transmitted without being encoded.

Therefore, the DVB-S2 receiver firstly decodes the LSB bit through a differential decoding operation, and then decodes the other upper six bits, i.e. RM code, through a majority-logic algorithm.

$$G = \begin{bmatrix} 01010101010101010101010101010101 \\ 00110011001100110011001100110011 \\ 00001111000011110000111100001111 \\ 00000000111111110000000011111111 \\ 00000000000000001111111111111111 \\ 11111111111111111111111111111111 \end{bmatrix}$$

$$\cdots(1)$$

The majority-logic algorithm determines whether each information bit is 1 or 0 based on majority decision. For instance, in Equation (2) for decoding the first bit $b_0$, if exclusive OR (XOR) operation is performed to each pair when $u_n$ demodulated through hard decision in the DVB-S2 receiver is not erroneous, 16 number of $b_0$ may be outputted as below.

$$u_0 \oplus u_1 = b_5 \oplus b_0 \oplus b_0 = b_0$$
$$u_2 \oplus u_3 = b_1 \oplus b_5 \oplus b_0 \oplus b_1 \oplus b_5 = b_0$$
$$\vdots$$
$$u_{30} \oplus u_{31} = b_0$$

$$\cdots(2)$$

where $\oplus$ denotes XOR operation. However, if received decoding bits $u_2$ and $u_4$ are erroneous, 14 bits from among the 16 bits are $b_0$ and the others are $b_0 \oplus 1$. In the case, an RM decoder finally determines $b_0$, which is a majority, according to the majority-logic algorithm.

According to the majority-logic algorithm, an interval between paired two received bits depends on the code generation matrix of Equation (1). That is, decoding for the second received bit $b_1$ is performed by using a method of pairing received bits $b_n$ corresponding to positions of elements 0 and 1 of each row of the code generation matrix such that u0⊕u2, u1⊕u3, u4⊕u6, and so forth.

Generalizing the above-mentioned decoding process, in the case where D=2$^k$, kth information bit calculates a majority coefficient, i.e. m$_k$, using the following equation.

$$m_k = \sum_{j=0}^{D-1} ( \sum_{i=0}^{K/(2D)-1} u_{D \cdot j+i} \oplus u_{D \cdot j+i+D} ) \qquad \ldots(3)$$

The kth information bit is determined based on a majority decision according to the majority coefficient m$_k$ as expressed in Equation (4). For instance, in the case of the code of (N,K)=(32,6) used in the DVB-S2 receiver of the present invention, the information bit is determined to be 1 if m$_k$ is greater than 8, and is determined to be 0 if m$_k$ is smaller than 8.

$$b_k = \begin{cases} 1, & if \ m_k \geq N/4 \\ 0, & else \end{cases} \qquad \ldots(4)$$

A majority coefficient for the last bit, i.e. b$_{k-1}$=b$_5$, is calculated as expressed in Equation (5) using the information bits b$_0$, b$_1$, b$_2$, b$_3$, and b$_4$ encoded through Equation (4).

$$m_{K-1} = \sum_{j=0}^{N-1} \left[ \left( \sum_{i=0}^{K-2} b_i \cdot G(i,j) \right)_{\text{mod} 2} \oplus u_j \right] \qquad \ldots(5)$$

where G(i, j) denotes an element of an ith row and a jth column of the code generation matrix of Equation (1). "·" denotes inner product.

Finally, hard decision for (K-1)th information bit is performed as expressed in Equation (6).

$$b_{K-1} = \begin{cases} 1, & if \ m_{K-1} \geq N/2 \\ 0, & else \end{cases} \qquad \ldots(6)$$

Reliability coefficients for measuring reliability of the information bits decoded through Equations (1) to (6) are calculated, and reliability of each information bit is evaluated using the reliability coefficients to thereby reduce a false alarm of frame detection. In operation S420, a reliability coefficient of an information bit b$_k$ decoded in reed-muller (RM) code constituting a PLS code is determined using correlation between a majority coefficient m$_k$ for each information bit b$_k$ and the information bit b$_k$.

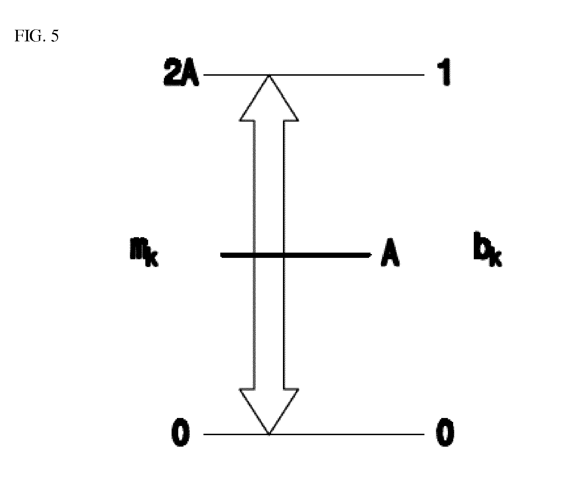

FIG. 5 is a diagram illustrating correlation between a majority coefficient and a decoded information bit, according to the present invention.

Referring to FIG. 5, the majority coefficient m$_k$ has a value ranging from 0 to 2A, and determines 0 and 1 based on a decision boundary "A" that is a intermediate value. Therefore, in the case where b$_k$=1, reliability is higher as m$_k$ is closer to 2A. On the contrary, in the case where bk=0, reliability is higher as m$_k$ is closer to 0. Based on this criterion, a value indicating reliability of each decoded information bit b$_k$ may be calculated. A reliability value for each bit is defined as a reliability coefficient r$_k$ in the present invention.

After decoding for all information bits is completed, the reliability coefficient r$_k$ is calculated as expressed in Equation (7) as illustrated in FIG. 6.

$$r_k = \frac{(2b_k - 1)(m_k - A)}{A}, \quad k = 0,1,2,...,K-1 \qquad ...(7)$$

where $m_k$ denotes a majority coefficient, $b_k$ denotes a decoded kth information bit, and "A" denotes a decision boundary. The coefficient "A" is calculated according to a position of an information bit as expressed in Equation (8).

$$A = \begin{cases} N/4, & \text{for } k = 0,1,...,K-2 \\ N/2, & \text{for } k = K-1 \end{cases} \qquad ...(8)$$

The reliability coefficient of Equation (7) has a value in a range of [0, 1]. As the reliability coefficient for a decoded corresponding bit is closer to 0, reliability is low. As the reliability coefficient for a decoded corresponding bit is closer to 1, reliability is high.

Next, it is determined whether MODCOD or TYPE calculated as a result of PLS decoding has a changed value in comparison with those of a previous frame. If the value is not changed, a slot symbol in a frame is demodulated and decoded in operation S470. If the value is changed, by using the reliability coefficient for each information bit calculated in operation S420, validity of information of decoded PLS is evaluated in operation S440.

In the present invention, in order to evaluate reliability (validity), a MIN scheme and a MEAN scheme are suggested. A reliability determining value "F" for determining whether the PLS code has an error is determined based on a specific value "S" as described below.

As an example, by using the MIN scheme, the receiver determines that the decoded PLS code does not have an error only when the reliability coefficient $r_k$ for all information bits is greater than a preset specific threshold value $\Gamma$, i.e. only when a minimal value of $r_k$ is greater than $\Gamma$.

The reliability determining value "F" using the MIN scheme is determined by Equations (9) and (10) below.

$$F = \begin{cases} 1, & \text{if } S > 0 \\ 0, & else \end{cases} \qquad ...(9)$$

$$S = \sum_{k=0}^{K-1} Q_\Gamma(r_k) \quad where \quad Q_\Gamma(r_k) = \begin{cases} 1, & \text{if } r_k < \Gamma \\ 0, & else \end{cases} \qquad ...(10)$$

As another example, by using the MEAN scheme, the receiver determines that the decoded PLS code does not have an error only when an average of the reliability coefficient $r_k$ for all information bits is greater than the specific threshold value $\Gamma$. Here, an average value "S" is calculated as expressed in Equation (11).

$$S = \frac{1}{K} \sum_{k=0}^{K-1} r_k \qquad ...(11)$$

The threshold value $\Gamma$ may be determined through various computer simulations, and may allow excellent performance with a value of 0.5.

If the information of MODCOD field and TYPE field is valid as a result of the validity evaluation of operation S440, the information is updated in operation S450, and frame-related information such as frame length, modulation order, and encoding length is calculated and is applied to a current frame in operation S460.

Thereafter, demodulation and decoding are performed for a slot symbol in the current frame in operation S470, and, if receiving is not finished after the demodulation and decoding for the slot symbol are completed in operation S480, a process flow is back to operation S410 for detecting a start point of a next frame.

As described above, according to the present invention, it is checked, after PLS decoding, whether the information of MODCOD field and TYPE field is the same as the information decoded in a previous frame. If both information are the same, it may be determined that only a decoded SOF bit has an error. Further, since frame detection has been normally performed, decoding for a slot symbol may be processed. However, if the PLS information is not the same as the information of the previous frame, it may be considered that the PLS code information has been changed according to a normal frame parameter change in a transmission unit or an error has occurred in the decoded PLS code as a result of performing PLS decoding at an incorrect position due to a false alarm at a frame detection part. Therefore, it may be determined which one of the two cases has caused the PLS code change. In the present invention, this determination is performed based on the reliability determining value "F" calculated according to Equation (9) during the PLS decoding process. When the reliability determining value "F" is 0, it is determined that the PLS code has been changed according to a normal process in the transmission unit. On the contrary, when the reliability determining value "F" is 1, the decoded PLS code has an error, and thus the current frame is not demodulated and a next frame is searched for. In this manner, it may be prevented that a slot symbol is demodulated at an incorrect frame position using incorrect PLS information.

According to the present invention, through the above-described processes, evaluation on a result of frame detection can be performed. As a result, abnormal operations of a receiver due to a false alarm can be reduced, thereby providing a stable receiving environment. Further, by providing reliability determination criteria for decoded information bits of a PLS code that provides information on an overall frame configuration, it is prevented that update is performed with erroneous system parameters. Thus, stability of the whole system can be secured.

The frame detecting method according to the present invention may be embodied as program codes executable by various computers so as to be recorded on a computer readable medium. The computer readable medium may include one or a combination of a program command, a data file, and a data structure. The program command recorded on the medium may be specially designed for the present invention or may be well known and available in the technical field of computer software. Examples of the computer readable recording medium include hard disks, floppy disks, magnetic media such as magnetic tapes, optical media such as CD-ROMs and DVDs, magneto-optical media such as optical disks, ROMs, RAMs, and flash memories. Examples of the program command include machine language codes made by compilers and high-level language codes that can be executed by computers using interpreters. The above-mentioned hardware may be configured to be operated as one or more software modules for performing operations of the present invention and vice versa.

A number of exemplary embodiments have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

**Claims**

1. A method of detecting a frame of a DVB-S2 receiver using physical layer signaling (PLS) decoded information, comprising:

   decoding a PLS code of a transmission bit stream;
   calculating a reliability coefficient of an information bit $b_k$ decoded in a reed-muller (RM) code constituting the PLS code; and
   evaluating validity of information decoded from the PLS code by using the reliability coefficient.

2. The method of claim 1, wherein the calculating of a reliability coefficient comprises calculating a reliability coefficient $r_k$ for each information bit $b_k$ by using correlation between a majority coefficient $m_k$ for each information bit $b_k$ calculated during the decoding of the PLS code and the information bit $b_k$.

3. The method of claim 1, wherein the reliability coefficient is calculated by Equation

$$r_k = \frac{(2b_k - 1)(m_k - A)}{A}, \quad k = 0,1,2,...,K-1$$

   where $m_k$ denotes a majority coefficient, $b_k$ denotes a decoded kth information bit, and "A" denotes a decision boundary.

4. The method of claim 1, wherein the evaluating of validity comprises determining that the information decoded from the PLS code is not erroneous when the reliability coefficients for all decoded information bits are greater than a preset threshold value.

5. The method of claim 1, wherein the evaluating of validity comprises determining that the information decoded from the PLS code is not erroneous when an average of the reliability coefficients for all decoded information bits is greater than a preset threshold value.

6. The method of claim 1, further comprising searching for a next frame without demodulating a slot for transmitting broadcast content in a current frame when the information decoded from the PLS code is determined to be erroneous as a result of evaluating validity of the information decoded from the PLS code.

FIG. 1

1Slot $\frac{\pi}{2}$ BPSK

16Slot

| PLHEADER | Slot#1 | Slot#2 | Slot#... | Slot#16 | Pilot Block | Slot#17 | Slot#S |

SOF (26 symbols) | PLS (64 symbols)

1 Slot=90 symbls
1 Pilot Block=36 symbol

FIG. 2-1

FIG. 2-2

FIG. 3

S310 — FRAME DETECTION

S320 — PLS DECODING (MODCOD, TYPE)

S330 — MODCOD OR TYPE CHANGE? — NO

YES

S340 — UPDATE WITH MODCOD, TYPE DECODED VALUES

S350 — PL FRAME INFORMATION SETTING

S360 — DEMODULATING AND DECODING OF SLOT SYMBOL IN FRAME

S370 — RECEIVING FINISHED? — NO

YES

END

START

FIG. 4

```
                          ┌───────────┐
                          │   START   │
                          └─────┬─────┘
                                │
                                ▼
S410    ┌───────────────────────────────────────────────┐
        │              FRAME DETECTION                    │
        └───────────────────────┬───────────────────────┘
                                │
                                ▼
S420    ┌───────────────────────────────────────────────┐
        │        PLS DECODING (MODCOD, TYPE),             │
        │  CALCULATING RELIABILITY DETERMINING VALUE "F"  │
        └───────────────────────┬───────────────────────┘
                                │
                                ▼
S430                    ╱─────────────╲
              NO       ╱    MODCOD      ╲
        ◄─────────────    OR            │
        │              ╲  TYPE CHANGE?  ╱
        │               ╲─────────────╱
        │                     │ YES
        │                     ▼
        │   S440         ╱─────────╲         NO
        │              ╱   F==0?    ╲ ─────────────►
        │              ╲───────────╱
        │                     │ YES
        │                     ▼
        │   S450  ┌───────────────────────────────────────┐
        │         │   UPDATE WITH MODCOD, TYPE DECODED VALUES│
        │         └───────────────────┬───────────────────┘
        │                             │
        │   S460  ┌───────────────────▼───────────────────┐
        │         │        PL FRAME INFORMATION SETTING     │
        │         └───────────────────┬───────────────────┘
        └─────────────────────────────┤
                                      ▼
   S470 ┌───────────────────────────────────────────────────┐
        │  DEMODULATING AND DECODING OF SLOT SYMBOL IN FRAME  │
        └───────────────────────┬───────────────────────────┘
                                │
                                ▼
   S480                  ╱─────────────╲        NO
                       ╱   RECEIVING     ╲ ──────────►
                       ╲   FINISHED?     ╱
                        ╲───────────────╱
                                │ YES
                                ▼
                          ┌───────────┐
                          │    END    │
                          └───────────┘
```

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020120154015